# DEMANDE DE BREVET EUROPEEN

(11) **EP 1 313 234 A1**
(43) Date de publication de la demande: **21.05.2003**
(21) Numéro de dépôt: 02292834.5
(22) Date de dépôt: 14.11.2002
(51) Int. Cl.: H04B 10/08

(54) **Procédé de contrôle dynamique d'un module optique**

(30) Priorité: 15.11.2001 FR 0114791
(71) Demandeur: Alcatel Optronics France, 75008 Paris (FR)
(72) Inventeur: Hamoir, Dominique, 91620 Nozay (FR)
(74) Mandataire: Feray, Valérie

(57) **Abrégé**

Procédé d'ajustement dynamique d'au moins un module optique compris dans un système optique comportant une pluralité de canaux de transmission, caractérisé en ce qu'il comporte les étapes suivantes :
- mesure de la qualité du signal optique en sortie du système définie par une fonction d'erreur (E) ;
- variation d'au moins un paramètre optique (X_{I}) d'au moins un des modules du système ;
- mesure du différentiel d'erreur (ΔE) introduit par chaque variation sur la fonction d'erreur du signal optique en sortie du système ;
- estimation d'un point de fonctionnement (X) du système correspondant à une réduction attendue de la fonction d'erreur (E) ;
- ajustement d'au moins un paramètre d'au moins un module optique (Xₗ) vers ledit point de fonctionnement du système (X).

## Description

La présente invention concerne le domaine des systèmes optiques utilisés dans le cadre de la transmission et/ou de l'amplification de signaux optiques.

De tels systèmes comportent classiquement des fibres optiques de transmission sur plusieurs kilomètres (quelques centaines ou quelques milliers selon les applications) divisées en tronçons reliés par des répéteurs dans lesquels les signaux optiques transmis sont amplifiés et éventuellement remis en formes. En effet, les signaux optiques sont transmis simultanément sur une pluralité de canaux optiques dans des fibres. Ces signaux ne subissent donc pas tous les mêmes contraintes et traitements optiques. Les répéteurs optiques incluent donc différents modules optiques qui ont pour fonction d'agir sur tout ou partie des signaux transmis. Par exemple, un répéteur peut inclure des amplificateurs (à fibre ou à semi-conducteur), des compensateurs de dispersion chromatique, des égaliseurs de gain, des multiplexeurs, ou tout autre module requis selon le jugement d'un homme du métier.

Les fibres optiques utilisées en transmission sont généralement constituées d'un coeur monomode ou multimode, pour la propagation simultanée de plusieurs signaux optiques, entouré d'une gaine protégée par un revêtement polymère. Le coeur et/ou la gaine peuvent être en silice ou en plastique polymère selon les applications. Les fibres présentent un taux d'atténuation du signal et une largeur de bande passante adaptés aux différentes applications pour lesquelles elles sont utilisées.

Un répéteur optique comporte généralement deux étages d'amplificateurs optiques, et souvent un module optique intercalé entre les deux étages, comme un égaliseur de gain, un multiplexeur, un compensateur de dispersion ou autre. Ces modules introduisent des pertes, pouvant généralement atteindre 9dB, et leurs paramètres sont généralement figés par un cahier des charges lors de la conception et de l'installation de la ligne de transmission.

Or, les systèmes optiques sont souvent évolutifs et il n'est pas rare que les paramètres d'un module optique ne soient plus du tout adaptés aux spectres de transmission réels. Par exemple, les différents composants optiques constituant les modules vieillissent, il peut y avoir des interventions localisées sur la ligne, il peut y avoir également des ajouts de modules ou de canaux optiques de transmission après l'installation de la ligne. Les paramètres préalablement fixés des différents modules deviennent alors inadaptés.

De plus, dans le cas d'amplificateurs à fibre (dopée Erbium ou amplificateur Raman), les amplificateurs sont associés à des lasers de pompe dont les performances sont fixées lors de leur installation. Or, les amplificateurs tout comme les lasers de pompe sont souvent standardisés et pas forcément bien adaptés aux conditions de fonctionnement dans lesquels ils sont placés, ni à fortiori aux évolutions de celles ci.

En outre, les amplificateurs optiques sont souvent associés à des égaliseurs de gain permettant de compenser les écarts d'amplification entre les différents canaux du signal transmis. Ces égaliseurs sont conçus pour répondre à certaines conditions de fonctionnement de l'amplificateur qui dépendent entre autre de la puissance d'entrée. Or, cette puissance d'entrée peut varier le long de la ligne de transmission, par exemple en fonction des longueurs de fibres parcourues par le signal. Une variation de puissance à l'entrée d'un amplificateur entraîne un décalage de son point de fonctionnement et une inadéquation du filtre égaliseur associé. C'est la raison pour laquelle des égaliseurs optiques dynamiques ont été développés, afin de s'adapter aux conditions de fonctionnement des amplificateurs en chaque point de la ligne de transmission. De tels égaliseurs de gain fournissent une atténuation en fonction de la longueur d'onde ajustable dynamiquement.

Il est donc classique de disposer des modules ajustables, notamment de type égaliseurs optiques dynamiques, dans les répéteurs optiques afin d'ajuster les conditions de fonctionnement des modules optiques le long de la ligne de transmission. De même, des lasers de pompe accordables sont également connus permettant de modifier les caractéristiques des amplificateurs d'un système optique.

De tels modules (et lasers) ajustables existent et sont bien connus de l'homme du métier. La difficulté essentielle est de piloter ces modules ajustables afin de modifier leurs paramètres et de les placer dans les conditions optimales de fonctionnement. L'accordabilité peut être faite au niveau du module ou du composant optique.

Différentes techniques de contrôle existent qui nécessitent toutes la mesure de certains paramètres ou performances optiques et une commande appropriée en fonction de cette mesure.

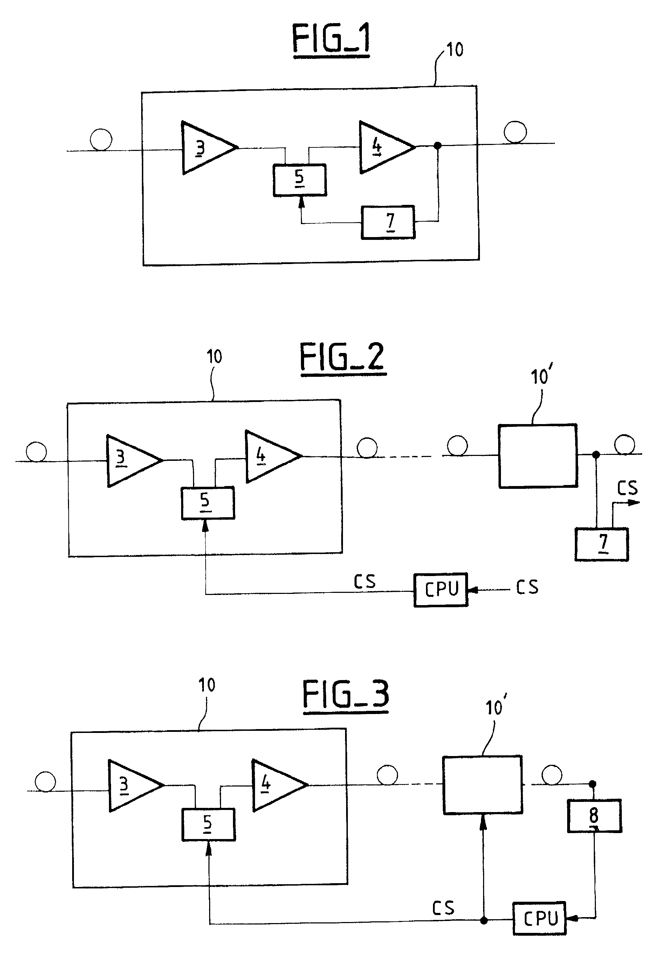

Une première technique de contrôle connue est illustrée sur la figure 1 sur laquelle un répéteur 10 est schématiquement représenté avec deux étages d'amplification 3 et 4 et un module optique 5, par exemple un égaliseur de gain. Une mesure optique est réalisée, par exemple au moyen d'un analyseur de spectre optique 7 tel qu'un OPM (pour Optical Power Monitor en terminologie anglaise) ou un OCM (pour Optical Chanel Monitor en terminologie anglaise). La mesure optique du spectre de transmission peut être prise avant, après ou entre les étages d'amplification 3 et 4. Cette mesure est rebouclée sur un organe de contrôle, tel qu'un processeur local, qui agit sur le module 5 ou directement sur le composant optique afin de l'ajuster en fonction de paramètres fixés, comme un gabarit de gain dans le cas d'un module égaliseur de gain. Cette technique de l'art antérieur nécessite un moyen de mesure 7 (analyseur de spectre par exemple) pour chaque répéteur 10, ce qui représente un coût non négligeable, et ne produit pas forcément le meilleur réglage possible car elle ne reflète pas l'ensemble des évolutions optiques de la ligne, le gabarit fixé pour un composant donné n'étant pas nécessairement le meilleur à un instant donné. En effet, cette technique de contrôle ne tient pas compte de possibles perturbations en aval de la ligne.

Une autre technique de contrôle connue est illustrée sur la figure 2 sur laquelle les mêmes éléments sont représentés par les mêmes références. Cette technique de l'art antérieur propose d'effectuer une mesure des paramètres optiques en un point donné de la ligne pour une action en amont. Par exemple l'ajustement d'un module optique donné 5 situé dans un répéteur optique donné 10 est commandé par une mesure effectuée par un analyseur de spectre 7 au niveau d'un répéteur 10' situé en aval, par exemple une dizaine de répéteurs plus loin. La commande d'ajustement est alors transmise par des canaux dits de supervision CS réservés à des actions de contrôle et de commande dans la ligne de transmission et qui peuvent être utilisés pour de telles mesures et ajustements.

Une telle technique reflète davantage des contraintes réelles de la ligne de transmission mais est relativement gourmande en capacité. Les canaux de supervision sont en effet limités pour ne pas empiéter sur la bande passante utile et sont essentiellement réservés à d'autres fins que l'ajustement de modules optiques.

De plus, ces techniques effectuent toujours un contrôle basé sur la réplique de paramètres optiques, tel qu'un gabarit spectral de puissance ou de rapport signal à bruit (OSNR pour Optical Signal to Noise Ratio), qui ont une influence directe sur la qualité du signal mais qui sont définis à partir d'hypothèses que l'on ne peut généralement pas garantir tout au long de la vie d'un système, ni même à son installation.

Le document EP0700178 divulgue un procédé d'ajustement d'une source accordable en longueur d'onde et de filtres compris dans un système optique comportant un seul canal de transmission, le procédé comportant
- une étape de mesure de la qualité du signal optique en sortie du système définie par une fonction d'erreur, à partir du diagramme de l'oeil ou du taux d'erreur binaire (BER),
- un balayage de la longueur d'onde en vue de son ajustement pour une réduction attendue de la fonction d'erreur,
- une étape d'ajustement des caractéristiques de transmission du filtre, en fonction de la longueur d'onde choisie.

Plus précisément, est réalisée une caractérisation complète de l'évolution de la fonction d'erreur en fonction de la longueur donde dans toute la gamme de valeurs de cette dernière.

Ce procédé n'est pas compatible avec une optimisation des performances du système en fonctionnement, c'est-à-dire lorsque le système transmet des données, car il implique nécessairement de dégrader momentanément les performances.

Ce procédé divulgué par D1 n'est pas un procédé d'ajustement fiable et performant d'un module dynamique.

Par ailleurs, ce procédé concerne l'ajustement de paramètres attachés qu'à un canal unique de transmission et non plus largement un ajustement sélectif de paramètres d'un canal en fonction des autres canaux.

En outre, toutes les techniques de contrôle décrites précédemment ne permettent pas d'ajuster plusieurs paramètres de plusieurs modules optiques distants en fonction les uns des autres pour un fonctionnement optimal du système optique dans sa globalité, en particulier lorsqu'un grand nombre de paramètres et/ou un grand nombre de canaux de transmission et/ou de modules entrent en jeu.

Ainsi, ces techniques ne permettent pas de gérer efficacement des modules dynamiques répartis le long d'une ligne de transmission. Les performances des systèmes de transmission pourraient donc être améliorées de façon significative par un contrôle dynamique efficace de modules optiques répartis le long d'une ligne de transmission.

L'objet de la présente invention est de proposer une nouvelle technique de contrôle dynamique de module(s) optique(s) compris dans un système optique comportant une pluralité de canaux de transmission à partir du signal optique reçu en sortie du système pour un ajustement en amont de paramètres optiques d'un ou de modules ajustables, ajustement optimisé en termes d'efficacité (temps de réponse, gain en qualité de signal de sortie, fiabilité etc).

En particulier, l'invention cherche à ajuster des paramètres optiques des différents modules répartis dans un système, telle qu'une ligne de transmission, en fonction les uns des autres et à partir du signal optique reçu en sortie du système.

La présente invention propose à cet effet un procédé d'ajustement dynamique d'au moins un module optique compris dans un système optique comportant une pluralité de canaux de transmission, caractérisé en ce qu'il comporte les étapes suivantes :
- mesure de la qualité du signal optique en sortie du système définie par une fonction d'erreur (E) ;
- variation d'au moins un paramètre optique (X_{I}) d'au moins un des modules du système ;
- mesure du différentiel d'erreur (ΔE) introduit par chaque variation sur la fonction d'erreur du signal optique en sortie du système ;
- estimation d'un point de fonctionnement (X) du système correspondant à une réduction attendue de la fonction d'erreur (E) ;
- ajustement d'au moins un paramètre d'au moins un module optique (Xᵢ) vers ledit point de fonctionnement du système (X) ;

Avantageusement, chaque variation de paramètre peut être réalisée au voisinage de la valeur dudit paramètre associée au point de fonctionnement courant et est de préférence infinitésimale.

Selon une caractéristique, au moins deux paramètres d'au moins un module optique du système sont successivement affectés par une variation.

Selon une caractéristique, tous les paramètres de chaque module optique du système sont successivement affectés par une variation.

Selon une caractéristique, les étapes dudit procédé sont répétées en boucle pendant le fonctionnement du système optique.

Selon les modes de mise en oeuvre, la mesure de qualité du signal optique pour chaque canal de transmission, en sortie du système, est fournie par le module correcteur d'erreurs (FEC) à partir du taux d'erreur binaire (BER), ou par un diagramme de l'oeil.

Selon les modes de réalisation, la fonction d'erreur utilisée pour définir la qualité du signal optique en sortie du système est définie comme la somme des BER au carré E=(ΣᵢBERᵢ²) sur l'ensemble des canaux de transmission du système ou est du type E=[α Σ(ei)^{β}]^{γ}, où ei est la qualité du i^{ème} canal de transmission du système et où α, β et γ sont des constantes positives non nécessairement entières.

Selon un mode de réalisation avantageux, le calcul du point de fonctionnement est effectué par une unité centrale de contrôle du système et les variations des paramètres des modules optiques et les commandes d'ajustement de chaque module optique du système sont déterminées par l'unité centrale de contrôle et transmises par des canaux de supervision.

Selon un mode de réalisation avantageux, les modules optiques à ajuster sont modélisés, une conversion directe étant définie entre la commande émise par la supervision et la variation induite sur un paramètre optique dudit module, préférentiellement la conversion est effectuée par le module lui-même de manière à produire une variation de paramètre donnée en réponse à une commande donnée reçue.

La présente invention concerne également un système optique comportant une pluralité de canaux de transmission et comprenant des modules optiques ajustables, caractérisé en ce qu'il comporte des moyens de mise en oeuvre du procédé d'ajustement de modules optiques selon l'invention.

Selon une caractéristique, le système optique comporte des moyens de variation des paramètres optiques de chaque module associés à des moyens de mesure des différentiels d'erreur introduits par lesdites variations sur une fonction d'erreur représentant la qualité du signal optique en sortie du système et des moyens de calcul d'un point de fonctionnement du système correspondant à une réduction attendue de ladite fonction d'erreur.

Selon les applications possibles, les modules optiques ajustables sont des égaliseurs de gain et/ou des lasers de pompe et/ou des multiplexeurs et/ou des coupleurs et/ou des compensateurs de dispersion chromatique et/ou des compensateurs de dispersion de mode de polarisation et/ou des filtres et/ou des atténuateurs variables et/ou des atténuateurs à pente variable et/ou des sélecteurs optiques (OADM pour Optical Add and Drop Multiplexer, OXC pour Optical Cross Connect).

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, illustre schématiquement une première technique de contrôle connue;
- la figure 2, déjà décrite, illustre schématiquement une deuxième technique de contrôle connue;
- la figure 3 illustre schématiquement la technique de contrôle de modules optiques selon l'invention.

En référence à la figure 3, la technique de contrôle des modules optiques ajustables d'un système optique comportant une pluralité de canaux de transmission est basée sur la mesure de la qualité du signal optique reçu en sortie du système pour une pluralité de canaux. Ainsi, une analyse globale peut être faite et l'ajustement des paramètres de chaque module peut tenir compte des contraintes générales du système. Une telle analyse globale implique de tenir compte de l'ensemble des éléments de la ligne de transmission, de bout en bout, et signifie que toutes des sources de dégradation sont prises en considération.

Le système considéré peut être une ligne de transmission comportant des tronçons de fibres de transmissions reliées par des répéteurs optiques 10. Le procédé selon l'invention s'applique cependant également à d'autres systèmes optiques tels que des réseaux optiques transparents ramifiés ou maillés incluant des noeuds comportant notamment des multiplexeurs, des coupleurs ou des sélecteurs optiques par exemple.

Selon l'invention, une mesure de la qualité optique du signal reçu en sortie est effectuée par un élément de mesure 8, telle qu'une unité de traitement électronique du signal. Selon les modes de mise en oeuvre, la mesure de qualité peut provenir d'un diagramme de l'oeil représentant la qualité des transitions optiques entre les bits à 0 et les bits à 1 des signaux optiques reçus ou du taux d'erreur binaire, connu sous l'acronyme anglais de BER pour Bit Error Rate. Certains systèmes optiques comportent en effet un traitement du BER pour fournir un retour de correction des erreurs, connu sous l'acronyme anglais de FEC pour Forward Error Correction. Un module correcteur d'erreur (FEC) est situé en réception du système optique. Le FEC permet de détecter les erreurs avec un excellent taux de réussite (typiquement une erreur sur 100000 n'est pas détectée).

Pour ce faire, certains canaux de transmission et/ou certaines tranches temporelles de chaque canal sont dédiées à des bits de contrôle tels que des bits de parités par exemple. Le taux d'erreur binaire BER avant correction par le module correcteur FEC est un paramètre directement accessible dans les systèmes optiques conventionnels, avec une incertitude sur le BER estimé par le FEC très faible, typiquement de l'ordre de 10⁻⁵.

A partir d'un point de fonctionnement donné du système optique dit point de fonctionnement courant X, un paramètre ajustable Xᵢ d'un module optique du système est successivement perturbé avec une variation au voisinage de la valeur dudit paramètre associée au point de fonctionnement courant, et de préférence infinitésimale ΔXₗ alors que tous les autres paramètres du système sont maintenus à leur valeur Xₖ (k≠l) correspondant au point de fonctionnement courant X. De la même façon, au moins un autre paramètre ajustable Xₗ d'un module optique du système est successivement perturbé avec une variation similaire ΔXₗ alors que tous les autres paramètres du système sont maintenus à leur valeur Xₖ (k≠l) correspondant au point de fonctionnement courant X.

Ceci peut être avantageusement réalisé pour l'ensemble des paramètres de tous les modules.

Ces variations sont avantageusement transmises aux modules par les canaux de supervision et commandées par une unité centrale de supervision du système CPU qui est aussi apte à interpréter les mesures de qualité du signal effectuées en sortie du système. Une fonction d'erreur scalaire est calculée à partir de ces mesures élémentaires prises sur chaque canal i de transmission.

Un différentiel d'erreur ΔE(I)= (δE/δXₗ)ₓΔXₗ introduit par chaque variation est alors mesuré sur la qualité du signal E en sortie, ce différentiel pouvant être négatif (une amélioration des conditions de fonctionnement) ou positif (une détérioration desdites conditions). Par exemple, une fonction d'erreur définie comme la somme des BER au carré E=(ΣᵢBERᵢ²), en accentuant le poids des canaux les plus défectueux, est considérée comme une bonne estimation de l'erreur à un instant donné.

Dans un mode de réalisation particulier, la fonction d'erreur utilisée peut être du type E=[α Σ(ei)^{β}]^{γ}, où ei est la qualité du i^{ème} canal de transmission du système, déterminée par le FEC ou par le diagramme de l'oeil, et où α, β et γ sont des constantes positives non nécessairement entières. Préférentiellement, β >1, préférentiellement 1.5 <β< 3, préférentiellement γ=1/β.

Un nouveau point de fonctionnement du système est alors calculé, par l'unité centrale de contrôle du système CPU à partir de chaque différentiel d'erreur introduit par chaque variation de paramètre. Il est à noter que plusieurs paramètres optiques X peuvent être concernés par des variations pour un même canal i de transmission. Ainsi, un nouveau point de fonctionnement du système peut être déterminé correspondant à une estimation d'une réduction de la fonction d'erreur, l'objectif étant de se rapprocher d'un minimum de la fonction d'erreur ou tout au moins de s'assurer que ladite fonction reste au voisinage immédiat d'un minimum.

Ainsi, le nouveau point de fonctionnement calculé correspond généralement à un déplacement du point de fonctionnement dans la direction du vecteur gradient de la fonction d'erreur (ΔE/ΔX). Le pas du déplacement est déterminé par l'algorithme d'optimisation (c'est à dire la minimisation de la fonction d'erreur) en fonction de l'amplitude du vecteur gradient. Généralement, le pas est réduit successivement jusqu'à obtenir une minimisation effective. Toutefois, il se peut que le déplacement effectué soit trop important et entraîne une augmentation de la fonction d'erreur, qui sera corrigée au déplacement suivant. Les algorithmes d'optimisation adaptés, avec gestion éventuelle des déplacements des points de fonctionnement, sont bien connus de l'homme de l'art, par exemple tels qu'ils sont décrits dans « Numerical RECIPES in C », 3eme édition.

Chaque module 3, 4, 5 peut alors être accordé en fonction des paramètres correspondants à ce nouveau point de fonctionnement X optimal du système. Un module donné peut ne pas être ajusté dans des conditions de fonctionnement propres optimales, mais il est accordé de manière à être placé dans des conditions de fonctionnement optimal pour l'ensemble du système auquel il appartient.

Tout comme les variations, les ajustements de paramètres optiques de chaque module sont commandés par l'unité centrale CPU et transmis par les canaux de supervision CS ou par tout autre moyen adéquat. Les canaux de supervision du système selon l'invention sont occupés uniquement pour une commande des modules optiques et non pas pour apporter des informations à l'unité centrale en provenance de chacun des modules, ce qui limite la capacité requise, en terme de bande passante des canaux de supervision, pour mettre en oeuvre le procédé de contrôle selon l'invention, et réduit le temps de réaction.

Dans un mode de réalisation avantageux, une variation de paramètre (telle que définie ci-dessus) est demandée pour une durée déterminée, de sorte qu'il n'est pas nécessaire d'envoyer de commande pour remettre ce paramètre à la valeur correspondant au point de référence. D'autre part, il n'est pas nécessaire d'attendre la mesure de la qualité du signal correspondant à une variation donnée pour commander la variation du paramètre suivant. Plusieurs variations successives peuvent également être demandées au moyen d'une commande unique, en particulier si ces variations concernent différents paramètres d'un même module optique.

Le procédé de contrôle selon l'invention ne nécessite pas de connaître avec précision la correspondance entre des paramètres de commande (tension, courant ou autre) et les paramètres optiques pour chaque module d'un système. Cela entraîne une nette réduction des coûts de test en fabrication et permet d'élargir les tolérances des paramètres, en particulier au vieillissement, lors de la fabrication des modules optiques. Il est même possible de rattraper des dérives inattendues d'un système optique en mettant en oeuvre le procédé selon l'invention. En effet, le système optique mesure directement la variation de la qualité du signal en fonction de la commande appliquée, et il n'est donc pas nécessaire de connaître la correspondance entre la commande et la variation de fonction optique de chaque module. Une modélisation approchée du module optique peut néanmoins s'avérer intéressante pour optimiser la recherche du point de fonctionnement optimal grâce à un choix de paramètres réduits pour la commande. Par exemple, une conversion directe peut être définie entre la commande émise par la supervision et la variation induite sur un paramètre optique d'un module modélisé. Cette conversion peut avantageusement être effectuée par le module lui-même afin de limiter les calculs nécessaires au niveau du CPU et surtout afin de ne pas avoir à tenir à jour, dans le CPU, une liste exhaustive des modules optiques et des modèles mathématiques associés. Ainsi, le CPU traites tous les paramètres de façon indifférenciée.

Le procédé de contrôle selon l'invention permet en outre d'étendre l'ajustement des paramètres à d'autres modules optiques que les égaliseurs, atténuateurs à pente variable et atténuateurs variables, par exemple aux pompes des amplificateurs.

De plus, les modules optiques concernés par le contrôle dynamique peuvent être répartis tout le long du système de transmission, sans incidence sur la qualité du contrôle. Ceci permet en particulier d'utiliser un égaliseur dynamique simplifié et éventuellement intégré à l'amplificateur optique ou à son module de pompage dans chaque répéteur plutôt qu'un égaliseur complexe tous les 5 ou 10 répéteurs.

Une telle technique de contrôle des paramètres optiques d'un système présente un temps de réponse amélioré par rapport aux techniques de l'art antérieur. Par exemple, si on considère un système optique constitué d'une liaison optique sous-marine transmettant 160 canaux à 10Gb/s sur environ 7000 km avec 200 répéteurs optiques, des amplificateurs Raman distribués avec 4 pompes par répéteur et un égaliseur comprenant 40 paramètres ajustables tous les 10 répéteurs, cela fait 800 pompes et 400 paramètres d'égalisation, soit 1200 paramètres au total. Si on considère un BER maximal acceptable à 10⁻⁵, évaluer l'impact de chaque perturbation prend environ 10ms avec une précision d'un millième sur le BER de chaque canal. Avantageusement, 10 ms supplémentaires peuvent être consacrées à la stabilisation du système avant l'estimation de l'erreur introduite. Ainsi, en considérant 20 ms d'estimation du différentiel d'erreur par paramètre varié, il faut 24s pour déterminer un nouveau point de fonctionnement du système, ce qui est parfaitement acceptable pour une liaison sous-marine, dont les constantes de temps de fluctuation des paramètres optiques correspondent généralement à des heures voire des jours.

De même, si on considère par exemple un système optique constitué d'une liaison optique terrestre transmettant 160 canaux à 10Gb/s sur environ 2000 km avec 20 répéteurs optiques, des amplificateurs avec 16 pompes par répéteur et un égaliseur comprenant 40 paramètres ajustables tous les 10 répéteurs, cela fait 320 pompes et 80 paramètres d'égalisation, soit 400 paramètres au total. Si on considère à nouveau 20 ms d'estimation du différentiel d'erreur par paramètre varié, il faut 8s pour déterminer un nouveau point de fonctionnement du système, ce qui est parfaitement acceptable pour une liaison terrestre.

En cas d'urgence, si une soudaine dégradation de la qualité du signal est détectée sur un ou plusieurs canaux de transmission, une estimation rapide peut être effectuée avec un nombre de paramètres réduits qui peuvent affecter directement et sélectivement les canaux endommagés. L'unité centrale de supervision du système est en mesure de déterminer rapidement les paramètres à tester et à ajuster.

De même, en cas de modification volontaire du fonctionnement du système, telle qu'une reconfiguration d'un OADM ou d'un OXC, l'unité centrale pourra réagir rapidement en ajustant sélectivement les paramètres directement affectés, par exemple la puissance des nouveaux canaux insérés ou des canaux voisins.

## Revendications

1. Procédé d'ajustement dynamique d'au moins un module optique compris dans un système optique comportant une pluralité de canaux de transmission, **caractérisé en ce qu'**il comporte les étapes suivantes :
- mesure de la qualité du signal optique en sortie du système définie par une fonction d'erreur (E) ;
- variation d'au moins un paramètre optique (Xₗ) d'au moins un des modules du système ;
- mesure du différentiel d'erreur (ΔE) introduit par chaque variation sur la fonction d'erreur du signal optique en sortie du système ;
- estimation d'un point de fonctionnement (X) du système correspondant à une réduction attendue de la fonction d'erreur (E) ;
- ajustement d'au moins un paramètre d'au moins un module optique (X_{I}) vers ledit point de fonctionnement du système (X).

2. Procédé d'ajustement dynamique d'un module optique selon la revendication 1, **caractérisé en ce que** chaque variation de paramètre est réalisée au voisinage de la valeur dudit paramètre associée au point de fonctionnement courant et est de préférence infinitésimale.

3. Procédé d'ajustement dynamique d'un module optique selon l'une des revendications 1 ou 2, **caractérisé en ce qu'**au moins deux paramètres d'au moins un module optique du système sont successivement affectés par une variation.

4. Procédé d'ajustement dynamique d'un module optique selon l'une des revendications 1 à 3, **caractérisé en ce que** tous les paramètres (X_{I}) de chaque module optique du système sont successivement affectés par une variation.

5. Procédé d'ajustement dynamique d'un module optique selon l'une des revendications précédentes, **caractérisé en ce que** les étapes dudit procédé sont répétées en boucle pendant le fonctionnement du système optique.

6. Procédé d'ajustement dynamique d'un module optique selon l'une des revendications 1 à 5, **caractérisé en ce que** la mesure de qualité du signal optique pour chaque canal de transmission (eᵢ), en sortie du système, est fournie par le module correcteur d'erreurs (FEC) à partir du taux d'erreur binaire (BER).

7. Procédé d'ajustement dynamique d'un module optique selon l'une des revendications 1 à 5, **caractérisé en ce que** la mesure de qualité du signal optique pour chaque canal de transmission (eᵢ), en sortie du système est fournie par un diagramme de l'oeil.

8. Procédé d'ajustement dynamique d'un module optique selon l'une des revendications 1 à 7, **caractérisé en ce que** la fonction d'erreur est définie comme la somme des BER au carré E=(ΣᵢBERᵢ²) sur l'ensemble des canaux de transmission du système.

9. Procédé d'ajustement dynamique d'un module optique selon l'une des revendications 1 à 7, **caractérisé en ce que** la fonction d'erreur est du type E=[α Σ(ei)^{β}]^{γ}, où ei est la qualité du i^{ème} canal de transmission du système et où α, β et γ sont des constantes positives non nécessairement entières.

10. Procédé d'ajustement dynamique d'un module optique selon l'une quelconque des revendications précédentes, **caractérisé en ce que** le calcul du point de fonctionnement (X) est effectué par une unité centrale de contrôle du système (CPU).

11. Procédé d'ajustement dynamique d'un module optique selon l'une quelconque des revendications précédentes, **caractérisé en ce que** les variations des paramètres des modules optiques (X_{I}) et les commandes d'ajustement de chaque module optique du système sont déterminées par une unité centrale de contrôle du système et transmises par des canaux de supervision dudit système.

12. Procédé d'ajustement dynamique d'un module optique selon la revendication 11, **caractérisé en ce que** les modules optiques à ajuster sont modélisés, une conversion directe étant définie entre la commande émise par la supervision et la variation induite sur un paramètre optique dudit module.

13. Procédé d'ajustement dynamique d'un module optique selon la revendication 12, **caractérisé en ce que** la conversion est effectuée par le module lui-même de manière à produire une variation de paramètre (Xₗ) donnée en réponse à une commande donnée reçue.

14. Système optique comportant une pluralité de canaux de transmission et comprenant des modules optiques ajustables, **caractérisé en ce qu'**il comporte des moyens de mise en oeuvre du procédé d'ajustement d'au moins un module optique selon les revendications 1 à 13.

15. Système optique selon la revendication 14, **caractérisé en ce qu'**il comporte des moyens de variation des paramètres optiques de chaque module associés à des moyens de mesure des différentiels d'erreur introduits par lesdites variations sur une fonction d'erreur représentant la qualité du signal optique en sortie du système et des moyens de calcul d'un point de fonctionnement du système correspondant à une réduction de ladite fonction d'erreur.

16. Système optique selon l'une des revendications 14 à 15, **caractérisé en ce que** les modules optiques ajustables sont des égaliseurs de gain et/ou des lasers de pompe et/ou des multiplexeurs et/ou des coupleurs et/ou des compensateurs de dispersion chromatique et/ou des compensateurs de dispersion de mode de polarisation et/ou des filtres et/ou des atténuateurs variables et/ou des atténuateurs à pente variable et/ou des sélecteurs optiques (OADM pour Optical Add and Drop Multiplexer, ou OXC pour Optical Cross Connect).
